# EUROPÄISCHE PATENTSCHRIFT

(11) **EP 2 416 936 B1**
(45) Veröffentlichungstag und Bekanntmachung des Hinweises auf die Patenterteilung: **11.12.2013**
(21) Anmeldenummer: 10713441.3
(22) Anmeldetag: 07.04.2010
(51) Int. Cl.: B29C 47/90

(54) **VORRICHTUNG ZUM KALIBRIEREN VON PROFILEN**
DEVICE FOR CALIBRATING PROFILED PIECES
DISPOSITIF DE CALIBRAGE DE PROFILÉS

(30) Priorität: 07.04.2009 AT 5512009
(43) Veröffentlichungstag der Anmeldung: 15.02.2012
(73) Patentinhaber: Politsch Kunststofftechnik GmbH, 4551 Ried Im Traunkreis (AT)
(72) Erfinder: SCHWAIGER, Meinhard, A-4040 Linz (AT)
(74) Vertreter: Babeluk, Michael
(86) Internationale Anmeldenummer: PCT/EP2010/054572
(87) Internationale Veröffentlichungsnummer: WO 2010/115914

(56) Entgegenhaltungen:
- EP-A1- 1 524 093
- EP-A2- 0 385 285
- WO-A2-2009/027481
- WO-A2-2009/027481
- US-A- 5 008 051

## Beschreibung

Die Erfindung betrifft eine Vorrichtung zum Kalibrieren von Profilen aus Kunststoff, insbesondere von Hohlkammerprofilen, die vorgelagert in einem Extruder als Endlosstrang hergestellt werden, mit einem Kalibriertisch, einem Trockenkalibrierabschnitt und einem Nasskalibrierabschnitt.

Dabei betrifft die vorliegende Erfindung jenen Teil einer Vorrichtung zur Herstellung von Profilen im Extrusionsverfahren, die zum Kalibrieren - dem definierten Abkühlen und der exakten geometrischen Formgebung -des endlos hergestellten Profilstranges erforderlich ist und als Kalibriertisch (Vakuumkalibriertisch) bezeichnet wird.

Dem Stand der Technik entsprechend (siehe beispielsweise WO 2004/037516 A2) werden Kunststoffprofile als Endlosstrang im Extrusionsverfahren hergestellt, typischerweise auf einer Extrusionsanlage bestehend aus einem Extruder, der die Kunststoffmasse in einem kontinuierlichen Prozess plastifiziert, einer Extrusionsdüse, in der die plastifizierte Kunststoffmasse zu einem weichen Profilstrang geformt wird, einem Kalibrierwerkzeug, zur definierten Wärmeabfuhr aus dem Profilstrang und zur exakten geometrischen Formgebung, einem Kalibriertisch, auf dem das Kalibrierwerkzeug aufgebaut und exakt justiert werden kann und der die erforderliche Vakuumleistung und Kühlleistung zur Verfügung stellt, einem Profilraupenabzug, der mittels Reibung den Profilstrang mit gleichmäßiger Geschwindigkeit durch das Kalibrierwerkzeug zieht, sowie einer Ablängvorrichtung, zum definierten Ablängen des endlosen Profilstranges in Profilstäbe mit gleicher Länge. Die Ablängvorrichtung kann als fliegende Säge mit rotierendem Sägeblatt zum spanenden Trennen bzw. als Trenneinheit mit einem Trennmesser zum spänelosen Trennen ausgeführt sein. Zur Herstellung von Kunststoffprofilen kommt das Einzelstrang- bzw. Doppelstrang-Extrusionsverfahren zur Anwendung.

Aus Wirtschaftlichkeitsgründen gewinnt das Doppelstrang-Extrusionsverfahren gegenüber dem Einzelstrang Extrusionsverfahren zunehmend an Bedeutung, weil etwa bei vergleichbarem Platzbedarf, eine Verdoppelung der Produktionsleistung möglich ist.

Bei einer dem Stand der Technik entsprechenden Vorrichtung zum Kalibrieren von Kunststoffprofilen wird das Kalibrierwerkzeug, bestehend aus einem Trockenkalibrierabschnitt und einem Nasskalibrierabschnitt, zur Gänze der Länge nach auf einem Aufspannrahmen des Kalibriertisches aufgebaut und befestigt. Der Aufspannrahmen bzw. der Kalibriertisch verfügen über vertikale, transversale (quer zur Extrusionsrichtung) und longitudinale Verstellmöglichkeiten, um das Kalibrierwerkzeug exakt fluchtend auf die Werkzeugdüse justieren zu können. Über Schlauchleitungen wird das Kalibrierwerkzeug mit Kühlwasser und Vakuum aus dem Kalibriertisch versorgt. Dabei sind in der Regel unterschiedliche Vakuumniveaus in den einzelnen Abschnitten des Trockenkalibers und gegenüber den Nasskalibriertanks (Vakuumtanks) verfahrensbedingt erforderlich. Kühlwasser wird in die Trockenkaliberblöcke eingeleitet und innerhalb der Trockenkaliberblöcke über Kühlbohrungen verteilt. Erwärmtes Kühlwasser fließt aus den Trockenkaliberblöcken aus und gelangt in eine Wasserauffangwanne, die unterhalb des Aufspannrahmens angeordnet ist, und in weiterer Folge über spezielle Abflussöffnungen in darunter befindliche Tanks bzw. direkt in einen werksseitigen Rücklaufkanal beispielsweise zu einer Kühlanlage. Im Falle von Hohlkammerprofilen ist innerhalb des Nasskalibriertanks ein Vakuum erforderlich, sodass das erwärmte Kühlwasser aus den Tanks mit dem Vakuum abgesaugt wird und in der Regel nach einer Wasser-Luft-Trennung im drucklosen Zustand in den werksseitigen Rücklaufkanal geleitet wird. Bei Vollprofilen entfällt die Notwendigkeit von Vakuum im Nasskalibriertank, so dass Kühlwasser direkt über den Rand des Kalibriertanks in die darunter befindliche Wasserauffangwanne läuft.

Nachteilig sind bei einer Kalibriervorrichtung dem Stand der Technik entsprechend folgende Aspekte:
- Die Wasserauffangwanne erstreckt sich über die gesamte Länge des Kalibriertisches (in der Regel mindestens über die gesamte Länge des Kalibrierwerkzeuges).
- Die enorme Größe der Oberfläche der Wasserauffangwanne entspricht der Breite und der Länge des Kalibriertisches und führt zu einer weiteren Erwärmung des aus dem Kaliberwerkzeug austretenden Kühlwassers, wodurch eine Erhöhung des Kühlleistungsbedarfs für die Rückkühlung des Kühlwassers erforderlich ist. Die übliche Temperatur des Kühlwassers am Eintritt in das Kalibrierwerkzeug beträgt ca. 12 - 18 °C; im Durchschnitt wird das Kühlwasser um ca. 0,5 bis 3 °C im Kalibrierwerkzeug erwärmt. In Abhängigkeit von der Hallentemperatur erfolgt eine weitere Erwärmung des rücklaufenden Kühlwassers in der Wasserauffangwanne, was ausschließlich einen Energieverlust bedeutet.
- Der Kalibriertisch erstreckt sich über die gesamte Länge des Kalibrierwerkzeuges, welche in Abhängigkeit von der Extrusionsleistung üblicherweise Längen von ca. 5 m bis zu 20 m aufweisen. Dies führt zu einer kostenintensiven Bauweise.
- Die zur Versorgung des Kaliberwerkzeuges verwendeten Leitungen sind üblicherweise flexible Schlauchleitungen, die aufgrund der relativen Verfahrwege des Aufspannrahmens zum Kalibriertisch große Längen aufweisen, seitlich über den Kalibriertisch hinaus ragen und in durchhängenden Schlaufen verlegt sind. Dies bedingt instabile Strömungsverhältnisse, weil in den durchhängenden Vakuumschläuchen in den tiefsten Stellen Wasseransammlungen entstehen, die je nach Druckaufbau undefiniert im Vakuum mitgefördert werden oder wieder zurück in die tiefste Stelle des Vakuumschlauches fließen. Dadurch kommt es zu unangenehmen "Druckschlägen", die sich in sichtbaren Abzeichnungen (periodische Maßänderungen, Kantenunruhen, periodische Wanddickenunterschiede, etc.) am Profil bemerkbar machen. Diese Nachteile treffen auf bekannte Lösungen zu, wie sie in der WO 2009/027481 A EP 0 385 285 A2 und in der US 5008051 A beschrieben sind.

Aufgabe der Erfindung ist es, eine Vorrichtung zum Kalibrieren von Profilen aus Kunststoff, insbesondere von Hohlkammerprofilen, derart zu verbessern, dass der konstruktive Aufwand der Gesamtvorrichtung verringert werden.

Diese Aufgabe wird erfindungsgemäß mit einer Vorrichtung nach Anspruch 2 gelöst.

Instabile Strömungsverhältnisse, bedingt durch durchhängende Vakuumschläuche, bei welchen in den tiefsten Stellen Wasseransammlungen entstehen, können dadurch wirksam vermieden werden.

Die Stütz- und Versorgungselemente sin verfahrbar ausgeführt, so dass die Umrüstzeiten verkürzt werden können.

In der Folge wird die Erfindung anhand der Figuren 1 bis 5 näher erläutert. Es zeigen:
- Fig. 1: eine erfindungsgemäße Vorrichtung zum Kalibrieren von Profilen aus Kunststoff, insbesondere von Hohlkammerprofilen, in einer dreidimensionalen Ansicht in einer ersten (I) und einer zweiten (II) Produktionseinstellung,
- Fig. 2: die Kalibriervorrichtung gemäß Fig. 1 in einer Seitenansicht,
- Fig. 3: die Vorrichtung gemäß Fig. 2 in einer Frontalansicht,
- Fig. 4: einen vergrößerten Teilbereich der beiden Produktionseinstellungen gemäß Fig. 1, sowie
- Fig. 5: den Übergangsbereich zwischen Trockenkalibrierabschnitt und Nasskalibrierabschnitt der Vorrichtung gemäß Fig. 1 in vergrößerter Darstellung.

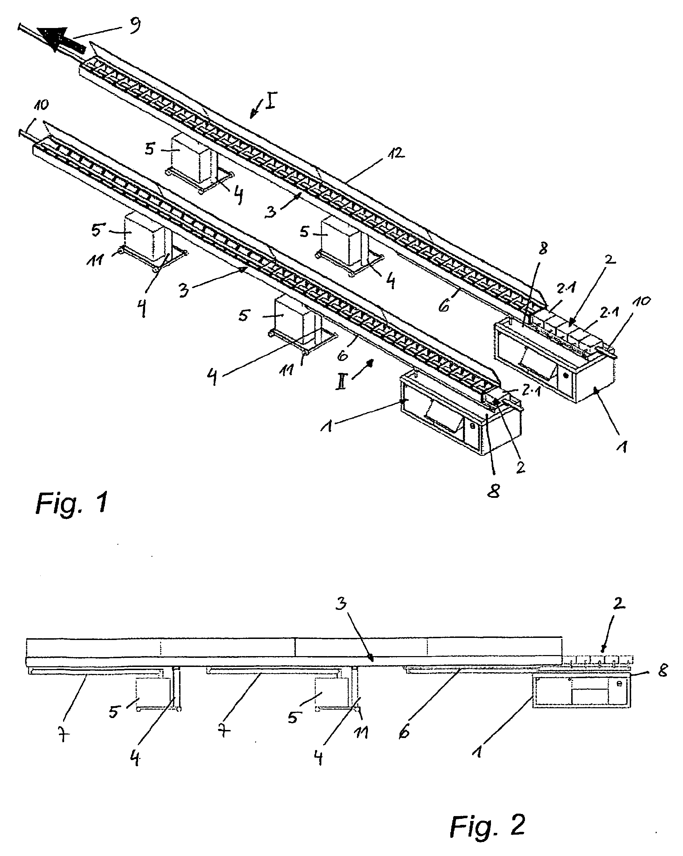

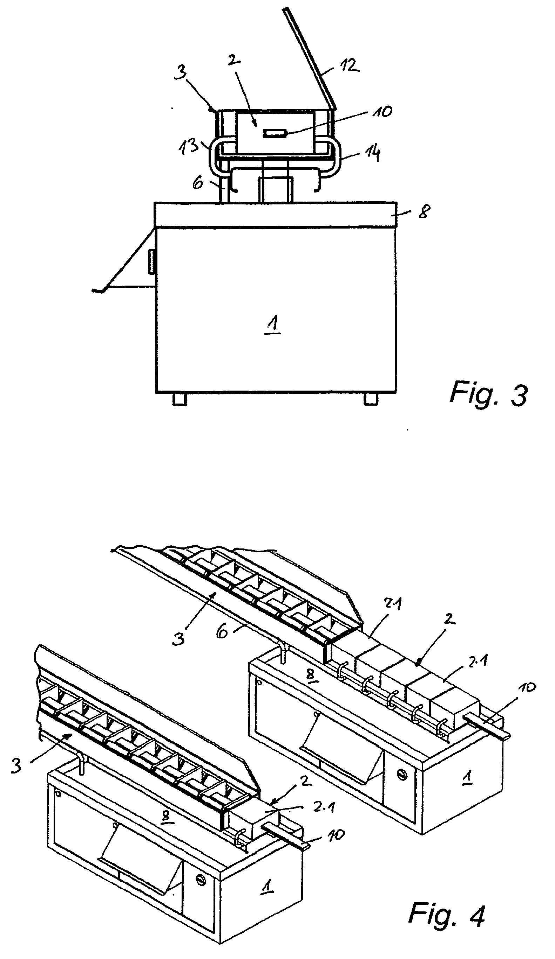

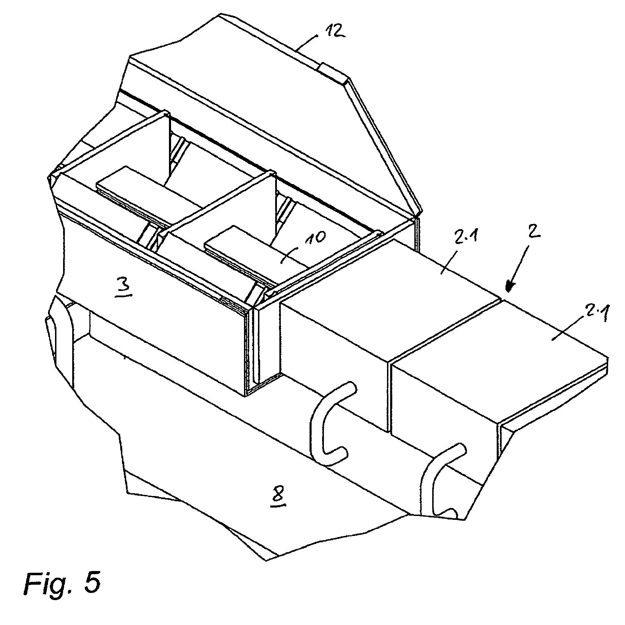

Die gegenständliche Erfindung beschreibt in den Fig. 1 bis 5 eine Vorrichtung, mit der Kunststoffprofile 10 im Einzelstrang-Extrusionsverfahren bzw. im Doppelstrang-Extrusionsverfahren unter Vermeidung der zuvor beschriebenen Nachteile hergestellt werden können.

Die erfindungsgemäße Vorrichtung zum Kalibrieren von Profilen weist im Gegensatz zum Stand der Technik einen relativ kleinen Kalibriertisch 1 auf, der sich im Wesentlichen auf den Bereich des Trockenkalibrierabschnittes 2 und den Übergangsbereich zum Nasskalibrierabschnitt 3 beschränkt. Demzufolge verringert sich auch die Größe der Wasserauffangwanne 8, die das aus den Trockenkalibrierwerkzeugen 2.1 austretende Kühlwasser auffängt. Durch die Verkleinerung der Wasseroberfläche, in welcher das rücklaufende Kühlwasser mit der Hallentemperatur in direktem Kontakt steht, kann der Kühlaufwand zur Abkühlung des rücklaufenden Kühlwassers auf die benötigten 12°C bis 18°C wesentlich reduziert werden.

Der über dem Kalibriertisch 1 hinausragende Teil des Nasskalibrierabschnittes 3 weist Stützelemente 4 sowie Versorgungselemente 5 zur Bereitstellung von Kühlwasser und Vakuum auf.

In Fig. 1 ist in einer ersten Produktionseinstellung I ein größerer Trockenkalibrierabschnitt 2 dargestellt, der insgesamt fünf Trockenkalibrierwerkzeuge 2.1 umfasst, die einen Wasseranschluss 13 und einen Vakuumanschluss 14 aufweisen. Die Kalibriervorrichtung kann in eine Produktionseinstellung II umgerüstet werden, in welcher der Nasskalibrierabschnitt 3 nach vorne (entgegen die Extrusionsrichtung 9) verschoben wird, wobei hier nur ein Trockenkalibrierwerkzeug 2.1 eingesetzt wird). Die vakuumdichte Abdeckung 12 des Nasskalibrierabschnitts 3 ist in geöffnetem Zustand dargestellt.

Wie beispielsweise in den Fig. 1 und 2 erkennbar, kann der Nasskalibrierabschnitt 3 in Teilbereiche unterteilt sein, die jeweils eine Stütz- und Versorgungselement 4, 5 zur Bereitstellung von Kühlwasser und Vakuum aufweisen.

Erfindungsgemäß sind die Kühlwasserleitungen 6 und die Vakuumleitungen 7 zwischen den Teilbereichen des Nasskalibrierabschnitts 3 und den einzelnen Versorgungselementen 5 sowie dem Kalibriertisch im Wesentlichen waagrecht geführt, so dass die beim Stand der Technik auftretenden Nachteile von in Schlaufen verlegten flexiblen Schlauchleitungen vermieden werden können.

Zum einfacheren Justieren und Umrüsten der einzelnen Teile der Kalibriervorrichtung sind die Stütz- und Versorgungselemente 4, 5 verfahrbar ausgeführt und beispielsweise mit Rollen 11 ausgestattet.

## Patentansprüche

1. Vorrichtung zum Kalibrieren von Profilen (10) aus Kunststoff, insbesondere von Hohlkammerprofilen, die vorgelagert in einem Extruder als Endlosstrang hergestellt werden, mit einem Kalibriertisch (1), einem Trockenkalibrierabschnitt (2) und einem Nasskalibrierabschnitt (3), der über Kühlwasserleitungen (6) und Vakuumleitungen (7) versorgt ist, **dadurch gekennzeichnet, dass** einer über den Kalibriertisch (1) hinausragende Teil des Nasskalibrierabschnitts (3) zumindest ein Stütz- und Versorgungselement (4, 5) zur Bereitstellung von Kühlwasser und/oder Vakuum aufweist und dass der Kalibriertisch (1) auf den Bereich des Trockenkalibrierabschnitts (2) und einen Übergangsbereich zum Nasskalibrierabschnitt (3) beschränkt ist und dass die Kühlwasserleitungen (6) und die Vakuumleitungen (7) zwischen Teilbereichen des Nasskalibrierabschnitts (3) und den einzelnen Versorgungselementen (5) und/oder dem Kalibriertisch (1) starr ausgeführt und im Wesentlichen waagrecht geführt sind und dass die Stütz- und Versorgungselemente (4, 5) verfahrbar ausgeführt sind.

2. Vorrichtung nach Anspruch 1, **dadurch gekennzeichnet, dass** der Nasskalibrierabschnitt (3) in Teilbereiche unterteilt ist, die jeweils eine Stütz- und Versorgungselement (4, 5) zur Bereitstellung von Kühlwasser und ggf. Vakuum aufweisen.

## Claims

1. An apparatus for calibrating profiles (10) made of plastic, especially hollow-chamber profiles, which are produced upstream in an extruder as an endless strand, comprising a calibrating table (1), a dry calibrating section (2) and a wet calibrating section (3) which is supplied via cooling-water conduits (6) and vacuum conduits (7), **characterised in that** a portion of the wet calibrating section (3) protruding beyond the calibrating table (1) comprises at least one support and supply element (4, 5) to provide cooling water and/or vacuum, and the calibrating table (1) is limited to the area of the dry calibrating section (2) and a transitional area to the wet calibrating section (3), and the cooling-water conduits (6) and the vacuum conduits (7) are arranged rigidly between the partial areas of the wet calibrating section (3) and the individual supply elements (5) and/or the calibrating table (1), and are guided substantially horizontally, and the support and supply elements (4, 5) are movably arranged.

2. An apparatus according to claim 1, **characterised in that** the wet calibrating section (3) is subdivided into partial areas which respectively comprise a support and supply element (4, 5) to provide cooling water and optionally vacuum.

## Revendications

1. Dispositif de calibrage de profilés (10) en matériau synthétique en particulier de profilés creux qui sont fabriqués en amont dans une extrudeuse sous la forme ligne sans fin, comportant une table de calibrage (1), une section de calibrage à l'état sec (2) et une section de calibrage à l'état humide (3) qui est alimentée par des conduites d'eau de refroidissement (6) et des conduites de vide (7),
**caractérisé en ce qu'**
une partie de la section de calibrage à l'état humide (3) faisant saillie sur la table de calibrage (1) comporte au moins un élément d'appui et un élément d'alimentation (4, 5) pour permettre la préparation d'eau de refroidissement et/ou de vide, la table de calibrage (2) est limitée à la zone de la section de calibrage à l'état sec (2) et à une zone de transition allant vers la section de calibrage à l"état humide (3), les conduites d'eau de refroidissement (6) et les conduites de vide (7) sont réalisées rigidement entre des zones partielles de la section de calibrage à l'état humide (3) et les éléments d'alimentation individuels (5) et/ou la table de calibrage (1), et sont orientées essentiellement horizontalement, et, les éléments d'appui et les éléments d'alimentation (4, 5) sont déplaçables.

2. Dispositif conforme à la revendication 1,
**caractérisé en ce que**
la section de calibrage à l'état humide (3) est subdivisée en zones partielles qui portent chacune un élément d'appui et un élément d'alimentation (4, 5) pour la préparation d'eau de refroidissement et le cas échéant de vide.
